# FASCICULE DE BREVET EUROPEEN

(11) **EP 2 306 116 B1**
(45) Date de publication et mention de la délivrance du brevet: **07.12.2011**
(21) Numéro de dépôt: 09171966.6
(22) Date de dépôt: 01.10.2009
(51) Int. Cl.: F24J 2/46, F24D 3/10, F24D 19/08

(54) **Installation solaire thermique à drainage gravitaire**
Thermische Solareinrichtung mit Schwerkraftentleerung
Solar thermal installation with gravitational drainage

(43) Date de publication de la demande: 06.04.2011
(73) Titulaire: European Solar Engineering SA, 5580 Rochefort (BE)
(72) Inventeur: Descy, Gilbert, 5580 Han-Sur-Lesse (BE)
(74) Mandataire: Lerho, Marc J. A.

(56) Documents cités:
- EP-A2- 0 653 596
- DE-A1- 2 753 756
- DE-C1- 19 654 037
- GB-A- 2 090 963
- US-A- 4 027 821
- US-A- 4 237 862

## Description

### Objet de l'invention

La présente invention se rapporte à un système de production d'énergie solaire thermique disposant d'un circuit primaire hermétique à drainage gravitaire (« drain-back ») et à débit faible (« low-flow ») pour réaliser un écart de température important dans le circuit.

### Arrière-plan technologique et état de la technique

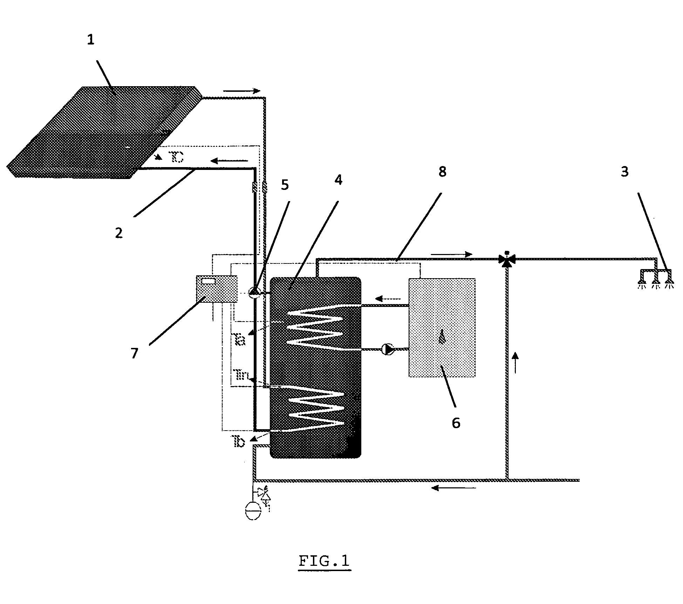

On connaît le principe du chauffe-eau solaire (CES) et du système solaire combiné (SSC) de production d'eau chaude et chauffage (voir figure 1). De l'énergie solaire est transformée en chaleur par des capteurs ou collecteurs solaires thermiques 1. Ceux-ci comprennent une surface absorbante qui capte le rayonnement solaire direct et diffus et transmet cette énergie thermique à un fluide caloporteur circulant dans un circuit de tubes 2, 8 vers une utilisation de la chaleur 3 (production d'eau chaude sanitaire, chauffage par le sol, etc.), à travers un ou plusieurs échangeurs thermiques 4. Le fluide caloporteur, par exemple eau ou antigel, circule dans le circuit primaire 2, isolé par au moins un échangeur 4 du circuit secondaire 8 où les calories acheminées sont utilisées. L'échangeur 4 peut également être connecté à une chaudière 6 à combustible fossile. Le fluide caloporteur peut circuler de manière naturelle dans le circuit primaire (thermosiphon) ou plus généralement de manière forcée, au moyen d'une pompe 5 (circulateur). Dans ce cas, le fonctionnement intermittent de la pompe 5 est piloté par une régulation 7 opérant par exemple sur base de mesures données par trois sondes de température (Tc, Tin, Tb : températures respectives des capteurs solaires 1, d'entrée et de sortie de l'échangeur 4).

Pour compenser la dilatation du fluide caloporteur, et assurer la sécurité du matériel, le circuit primaire comporte habituellement un vase d'expansion muni d'une soupape de sécurité, impérative si le circuit est fermé. On parle de drainage gravitaire (drain-back) lorsque les capteurs solaires, généralement situés à une hauteur supérieure à celle du circuit primaire, sont drainés en cas d'arrêt de la pompe. Cela peut être réalisé par exemple en équipant la pompe d'une vanne électromagnétique normalement ouverte qui est en by-pass lorsque la pompe est à l'arrêt et qui est fermée lorsque la pompe est en fonctionnement.

La conception de ce circuit primaire 2 de transfert est très importante pour optimiser le rendement du système solaire, réduire les coûts de montage et assurer une maintenance aisée. Ainsi la protection du fluide caloporteur est importante pour éviter à la fois les surchauffes et la dégradation de sa composition chimique.
En effet, les systèmes de l'état de la technique peuvent présenter des surpressions, ne sont pas hermétiques (présence de systèmes de purge) ou encore doivent faire l'objet de remplissage d'appoint.

Le document US-A-4,237,862 divulgue un système de chauffage solaire pressurisé et fermé comportant un circuit primaire communiquant avec un échangeur de chaleur et contenant un réservoir tampon rempli d'eau à un niveau déterminé, avant fonctionnement. Lorsqu'un certain différentiel de température entre les capteurs solaires et le réservoir échangeur de chaleur est atteint, un contrôleur provoque l'enclenchement de la pompe. L'air contenu dans le circuit s'accumule alors dans le réservoir tampon, ce qui fait baisser le niveau d'eau dans celui-ci. Ce dernier est en communication avec le circuit de retour des capteurs via une conduite de drainage verticale aboutissant à un point bas du réservoir et une conduite de dérivation aboutissant à un point haut du réservoir. Cette dernière est montée en dispositif de siphonage (ou section de cassage de vide), conçu pour qu'aucun siphonage n'ait lieu pendant la circulation forcée du fluide caloporteur. Lorsque la pompe s'arrête, le siphonage se produit et l'air remonte en direction des capteurs par la conduite de dérivation précitée. Ceci produit le drainage des capteurs et de la conduite de retour vers le réservoir, de même que la drainage de la conduite aller, au travers de la volute de la pompe, en flux inverse.

Le document US-A-4,336,792 divulgue un système de chauffage à énergie solaire fermé comportant un circuit primaire communiquant avec un échangeur de chaleur et contenant un réservoir de stockage permettant de drainer l'eau se trouvant dans les portions de circuit exposées au gel (en particulier les capteurs) et de la remplacer par de l'air, quand il n'y a pas de circulation d'eau. Lorsque l'eau circule, un tube d'afflux en dérivation du réservoir de stockage permet la circulation libre du volume total d'eau, avec extraction de l'air et entraînement de celui-ci dans la partie supérieure du réservoir de stockage. Lorsque la circulation s'arrête, le différentiel de pression entre la colonne d'eau froide et la colonne d'eau chaude provoque, par siphonage, le drainage de l'eau dans la direction inverse, avec remontée d'eau dans le réservoir et d'air dans la partie supérieure de l'installation, et en particulier dans les capteurs.

Le document US-A-4,027,821 divulgue un système de chauffage à énergie solaire en circuit fermé comportant un circuit primaire communiquant avec un échangeur de chaleur faisant également office de réservoir de stockage, prolongé, dans sa partie supérieure, par une chambre d'expansion. Lorsque l'eau circule dans le circuit, de l'air s'accumule dans la chambre d'expansion. Celle-ci est reliée à la sortie des capteurs solaires par un conduit de ventilation, dont l'ouverture se fait grâce à des vannes commandées qui s'ouvrent en l'absence de fluide ou en cas de diminution de pression dans le circuit primaire, donc lorsque la pompe ne fonctionne plus. Dans ce cas, l'air accumulé retourne vers les capteurs et provoque le drainage gravitaire de l'installation, tant dans la ligne aller vers les capteurs que dans la ligne de sortie des capteurs.

On voit que les différents systèmes de l'état de la technique destinés à assurer un drainage gravitaire d'une installation de chauffage solaire comprennent par exemple des circuits-siphons passifs ou des circuits de ventilation à vannes commandées. Les problèmes qui peuvent en résulter sont soit un manque de fiabilité ou la complexité de l'installation, soit une usure des éléments tels que les vannes ou une consommation excessive d'énergie électrique. De plus, ces systèmes présentent souvent un apport d'air extérieur et ne sont pas nécessairement hermétiques (ex. *vacuum breaker*). Il y a donc des risques de corrosion.

### Buts de l'invention

La présente invention a pour but de s'affranchir des inconvénients de l'état de la technique.

En particulier, l'invention vise à assurer une sécurité passive de l'installation solaire thermique en supprimant les problèmes de surchauffe du fluide caloporteur et sa dégradation.

L'invention a encore pour but d'assurer une vidange complète du circuit primaire par drainage gravitaire dans un circuit hermétique, sans laisser subsister de zones de stagnation.

L'invention a encore pour but d'optimiser le rendement du transfert énergétique et le coût du système.

### Principaux éléments caractéristiques de l'invention

Un premier objet de la présente invention se rapporte à une installation solaire thermique à drainage gravitaire, comprenant au moins les caractéristiques de la revendication 1,

Des exemples de formes d'exécution de l'invention reprennent en outre une ou plusieurs de caractéristiques suivantes, prises en combinaison :
- le conduit retour de l'échangeur comporte une vanne de réglage avec débitmètre intégré en aval de la pompe ;
- la vanne se trouvant dans le conduit de dérivation est une vanne électromagnétique ;
- la capacité du réservoir tampon est adaptée pour recevoir tout le volume d'air contenu initialement dans le circuit primaire, tout en maintenant un niveau permanent de liquide caloporteur dans le bas dudit réservoir tampon ;
- le conduit, débouchant à un point bas du réservoir tampon est muni d'une vanne d'arrêt ;
- le diamètre des conduits est choisi pour obtenir un ménisque d'interface, entre air et liquide, tel que l'air pousse, lors du drainage gravitaire, tout le liquide contenu dans le capteur solaire ;
- l'installation comporte une pluralité de capteurs solaires disposés selon un arrangement en série et parallèle, tel que la perte de charge hydraulique de groupe de capteurs raccordés en série et placés en parallèle soit prépondérante par rapport aux pertes de charges hydrauliques dans le reste du circuit primaire.

Un second objet de la présente invention se rapporte à un procédé de mise en oeuvre de l'installation décrite ci-dessus, caractérisé par les étapes suivantes :
- le circuit solaire primaire est rempli de manière hermétique de fluide caloporteur jusqu'au niveau imposé du réservoir tampon ;
- la pompe est mise en route, aspire le fluide caloporteur et l'envoie dans le capteur solaire ;
- par effet piston, le fluide caloporteur comprenant de l'air contenu dans le circuit primaire, en particulier dans le capteur, est envoyé par le premier conduit de retour dans le réservoir tampon, où l'air est séparé du liquide par gravité et à la sortie duquel le fluide caloporteur essentiellement dépourvu d'air est envoyé via le conduit de connexion vers l'échangeur ;
- de retour de l'échangeur, le liquide caloporteur est renvoyé au capteur via la pompe, la vanne du circuit de dérivation entre le circuit aller et le réservoir étant fermée tant que la pompe fonctionne et l'installation se met en régime ;
- lorsque la pompe cesse de fonctionner, le liquide caloporteur cesse de circuler dans le circuit primaire et l'air emprisonné dans le réservoir tampon remonte par surpression par le conduit vers le capteur, via le clapet anti-retour, qui est alors en sens passant ;
- la remontée de l'air provoque le drainage gravitaire du circuit primaire, le liquide caloporteur retournant au réservoir tampon d'une part par le conduit retour et d'autre part, par le conduit aller, le conduit de dérivation et le conduit de retour, la vanne située dans le conduit de dérivation étant ouverte.

### Brève description des figures

La figure 1, déjà mentionnée, représente schématiquement un système solaire thermique selon l'état de la technique.

La figure 2 représente un équipement de réservoir tampon pour la gestion automatique du drainage gravitaire du liquide et de la remontée de l'air, selon l'invention.

La figure 3 représente schématiquement un raccordement série-parallèle autorégulant un débit uniforme dans le champ de capteurs par pertes de charge importantes dans les capteurs en série.

### Description d'une forme d'exécution préférée de l'invention

La présente invention se rapporte à un système solaire thermique comprenant un circuit primaire solaire totalement hermétique. Aucune fuite par vanne de sécurité ou purge d'air ne sera admise dans cette installation afin de protéger le circuit contre tout apport d'oxygène atmosphérique.

Selon l'invention, le circuit primaire comporte un dispositif régulé de drainage gravitaire, appelé Dynasol^{™}, muni d'un réservoir tampon 31 isolé thermiquement et rempli initialement de fluide caloporteur à un niveau imposé 32. Ce niveau est visible et contrôlable par une tuyauterie translucide 18 raccordée entre deux raccords 16, 17 munis chacun d'une vanne d'arrêt (non représentée).

La capacité de ce réservoir tampon 31 sera choisie pour recevoir tout le volume d'air contenu initialement dans le circuit primaire en maintenant toujours un niveau permanent de liquide 33 dans le bas du réservoir 31.

Le volume d'air du circuit est au moins celui contenu dans l'ensemble des capteurs solaires et de la tuyauterie d'alimentation de ces capteurs, en dehors des équipements de dissipation d'énergie tels que des échangeurs thermiques.

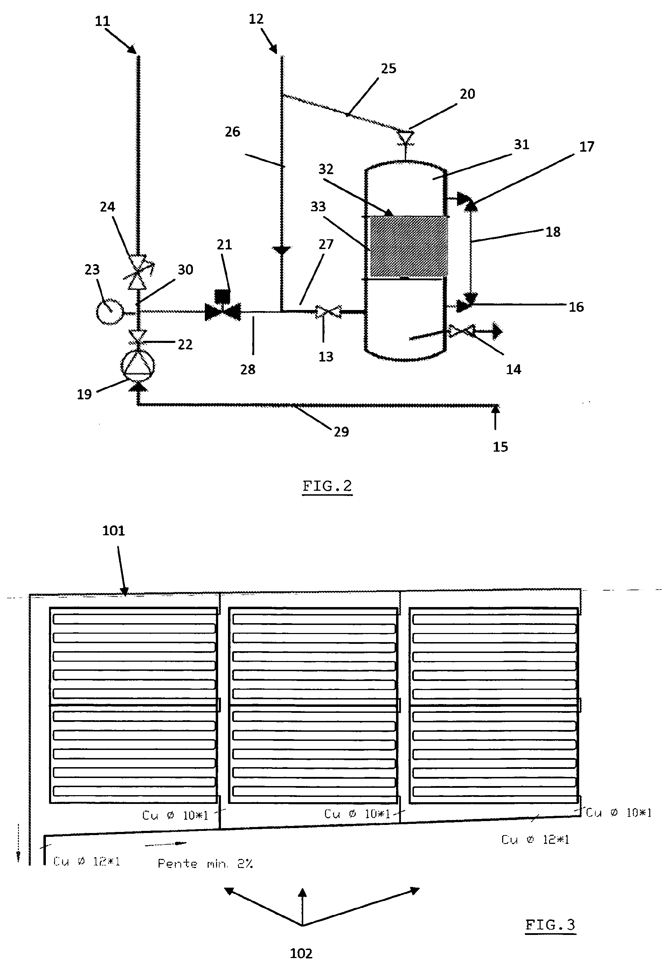

Le réservoir tampon 31 est connecté hydrauliquement au circuit primaire comme suivant le schéma de la figure 2, de façon à fonctionner comme un séparateur de liquide et d'air, sans brasser en permanence le liquide avec l'air confiné dans la partie haute du réservoir. Cette disposition empêche la dissolution de l'air dans le liquide et son transfert dans le circuit en cours de circulation, ce qui peut nuire au bon fonctionnement de la pompe et à la performance énergétique des capteurs solaires.

Le dispositif comprend ainsi deux raccordements hydrauliques 11, 12 (pour aller/retour) au circuit des capteurs solaires situés quant à eux de façon surélevée par rapport au dispositif de drainage.

Le dispositif comprend également deux raccordements hydrauliques 14, 15 (pour aller/retour) vers le circuit d'utilisation (c'est-à-dire l'échangeur), le raccord 14 étant lui muni d'une vanne d'arrêt.

Après le raccordement 12, le circuit de retour est séparé en deux tuyauteries 25, 26. La tuyauterie 25 est munie d'un clapet anti-retour 20. La tuyauterie 26 va jusqu'à un raccord en « T » où elle se sépare en deux tuyauteries 27, 28. La tuyauterie 27 est munie d'une vanne d'arrêt 13.

Le réservoir tampon 31 est ainsi muni d'une connexion 25 vers le haut permettant la remontée de l'air dans la partie haute du circuit et le drainage du liquide par gravité dans l'autre partie du circuit 26, 27 vers ce réservoir 31. Le clapet anti-retour 20 empêche la remontée de l'air pendant la circulation du liquide. Toutefois, lorsque la circulation du liquide s'arrête, la présence d'air sous pression dans le réservoir 31 fait que la pression dans la colonne de retour de fluide des capteurs est supérieure à la pression dans la colonne de fluide allant vers les capteurs. Il s'ensuit que l'air emprisonné dans le réservoir retourne vers les capteurs par la tuyauterie 25.

Le dispositif selon l'invention comprend également, dans le circuit d'alimentation des capteurs, une tuyauterie 29 reliant le raccord 15 et la pompe 19 munie d'un clapet anti-retour 22. En outre, une tuyauterie 30 relie le clapet 22 à une vanne de réglage 24 avec débitmètre intégré 23.

Lorsque le circuit solaire est enclenché, la pompe 19 aspire le fluide caloporteur et l'envoie vers le raccord 11 puis vers les capteurs solaires. En même temps, l'air compris dans le circuit est renvoyé vers le bas via le raccord 12. L'air ne peut parcourir la tuyauterie 25 car le clapet anti-retour 20 bloque le passage du fluide descendant (air + liquide) et dès lors, l'air passe par la tuyauterie 26, puis la tuyauterie 27 car la vanne électromagnétique 21 au niveau du conduit 18, normalement ouverte, est fermée dès que la pompe fonctionne.

Le circuit solaire est donc construit très simplement de façon telle que le liquide, quand il est mis en circulation par la pompe, agit comme un piston faisant en sorte que le volume d'air situé dans les capteurs est poussé dans le circuit de retour jusqu'au réservoir tampon sans laisser des poches d'air résiduelles dans le circuit, ce qui assure un bon transfert thermique et une sécurité de fonctionnement.

Selon l'invention, le débit du circuit primaire, assuré par un choix de pompe approprié, est fixé à une valeur telle que le débit de liquide passant dans les capteurs solaires est compris, en toutes circonstances de température et de viscosité, à une valeur fixée entre 15 et 20 litres par heure et par mètre carré de capteurs solaires.

Le circuit des capteurs solaires est en outre constitué de façon telle à ce que la vidange du liquide par drainage gravitaire soit complète. Ainsi les capteurs solaires auront de préférence un circuit continu en serpentin conçu pour qu'aucune poche ne puisse constituer un volume mort permettant au liquide de stagner dans un quelconque capteur. La dimension des tubes sera choisie pour permettre que le ménisque d'interface entre air et liquide soit tel que l'air pousse, lors du drainage tout le liquide contenu dans les capteurs solaires.

Selon une forme d'exécution préférée de l'invention, la répartition égale du débit global dans l'ensemble du champ de capteurs solaires sera assurée par un arrangement en série (101) et parallèle (102) de capteurs tel que la perte de charge hydraulique de groupe de capteurs raccordés en série et placés en parallèle soit de loin prépondérante par rapport aux pertes de charges hydrauliques de la partie complémentaire du circuit solaire primaire (figure 3). Cette manière d'arranger les capteurs solaires assurera de façon constructive la répartition uniforme du débit dans tous les capteurs solaires pour optimiser la performance du système.

Le choix de la pompe assurant le débit total sera tel qu'il permette de vaincre la hauteur manométrique totale, à savoir la hauteur géométrique ainsi que toutes les pertes hydrauliques du circuit primaire pendant son fonctionnement.

La pompe sera choisie de façon telle que le débit soit maintenu aussi constant que possible afin de maintenir des conditions optimales d'écoulement et de turbulence au niveau des tous les échangeurs thermiques, en ce compris les capteurs solaires.

Le volume d'air compris dans le réservoir tampon assurera la compensation de l'expansion volumique thermique du liquide contenu dans le circuit primaire. Lorsqu'il est fermé après remplissage initial, le circuit solaire n'est pas mis sous pression, il est dans l'état initial à la pression atmosphérique. Toutefois, il sera permis de créer une surpression de l'ordre de 50.000 Pa pour assurer une pression d'aspiration de pompe empêchant la cavitation. Selon une forme d'exécution particulière, outre le tube de lecture de niveau 18, le réservoir tampon 31 comprendra aussi en partie haute un manomètre et une vanne, normalement fermée, qui permettra de corriger le volume de liquide en cas de besoin (non représenté).

La présente invention propose une installation solaire thermique à drainage gravitaire permanent, simple et fiable. Contrairement à certaines installations de l'état de la technique, le réservoir tampon n'est pas couplé aux échangeurs de chaleur. Le retour du liquide caloporteur lors du drainage se fait dès lors, de manière parfaitement contrôlée, selon un circuit court, sans zones de stagnation du liquide, ce qui garantit un transfert énergétique optimal et sans repasser par la pompe et les échangeurs.

### Liste des repères

- 1: Capteur solaire
- 2: Circuit primaire
- 3: Utilisation
- 4: Echangeur multiple
- 5: Pompe (circulateur)
- 6: Chaudière à gaz ou fioul
- 7: Régulation
- 8: Circuit secondaire
- 11: Raccordement aller circuit primaire - capteurs
- 12: Raccordement retour circuit primaire - capteurs
- 13: Vanne d'arrêt
- 14: Raccordement du circuit primaire vers le circuit d'utilisation
- 15: Raccordement du circuit primaire en retour du circuit d'utilisation
- 16: Raccord avec vanne d'arrêt
- 17: Raccord avec vanne d'arrêt
- 18: Tuyauterie translucide
- 19: Pompe
- 20: Clapet anti-retour
- 21: Vanne commandée
- 22: Clapet anti-retour
- 23: Débitmètre intégré
- 24: Vanne de réglage
- 25: Tuyauterie entre circuit de retour et réservoir tampon (I)
- 26: Tuyauterie entre circuit de retour et réservoir tampon (II)
- 27: Tuyauterie vers le réservoir tampon
- 28: Tuyauterie vers les capteurs
- 29: Tuyauterie en retour de l'utilisation vers la pompe
- 30: Tuyauterie entre le clapet 22 et la vanne de réglage 24
- 31: Réservoir tampon
- 32: Niveau imposé de fluide caloporteur
- 33: Niveau minimal de fluide caloporteur

## Revendications

1. Installation solaire thermique à drainage gravitaire, comprenant au moins :
- un capteur solaire absorbant (1) surélevé relativement au reste de l'installation et dans lequel circule un liquide caloporteur,
- un circuit primaire hermétique (2), comprenant un circuit aller (15, 29, 30, 11) et un circuit retour (12, 26, 27, 25, 14) respectivement vers et du capteur (1), le circuit primaire étant muni d'une pompe (5, 19) ainsi que d'un réservoir tampon (31) isolé thermiquement et rempli initialement de liquide caloporteur à un niveau imposé (32), ayant la fonction de séparateur liquide/air,
- au moins un échangeur de chaleur (4) et
- un circuit secondaire (8) acheminant l'énergie récupérée vers une utilisation (3),
- le circuit retour du circuit primaire (2) se subdivise en deux conduits (25 ; 26, 27), un premier conduit (26, 27) qui ramène le liquide caloporteur à un point bas du réservoir tampon (31) lorsque la pompe (19) fonctionne et un second conduit (25) débouchant à un point haut dudit réservoir (31) ;
- le réservoir tampon (31) est connecté à l'échangeur (4) par un conduit de connexion à l'échangeur (14), le conduit retour (29) reliant l'échangeur (4) à la pompe (19)
l'installation étant **caractérisé en ce que** :
- le second conduit est muni d'un clapet anti-retour (20), qui permet le retour d'air vers le capteur (1) et par suite le drainage gravitaire du circuit primaire (2), lorsque la pompe (19) ne fonctionne plus ;
- le premier conduit (26, 27) se sépare en un conduit (27) débouchant dans le réservoir tampon (31) et un conduit de dérivation (28) débouchant dans ledit circuit aller (30) en aval de la pompe (19), et muni d'une vanne (21), normalement ouverte et qui se ferme dès que la pompe (19) fonctionne ;
et comportant un clapet anti-retour (22), se trouvant en amont du raccord du circuit aller (30) avec le circuit de dérivation (28).

2. Installation selon la revendication 1, **caractérisée en ce que** le conduit retour (29, 30) de l'échangeur (4) comporte une vanne de réglage (24) avec débitmètre intégré (23) en aval de la pompe (19).

3. Installation selon la revendication 1, **caractérisée en ce que** la vanne (21) se trouvant dans le conduit de dérivation (28) est une vanne électromagnétique.

4. Installation selon la revendication 1, **caractérisée en ce que** la capacité du réservoir tampon (31) est adaptée pour recevoir tout le volume d'air contenu initialement dans le circuit primaire (2), tout en maintenant un niveau permanent de liquide caloporteur (33) dans le bas dudit réservoir tampon (31).

5. Installation selon la revendication 1, **caractérisé en ce que** le conduit (27), débouchant à un point bas du réservoir tampon (31) est muni d'une vanne d'arrêt (13).

6. Installation selon la revendication 1, **caractérisée en ce que** le diamètre des conduits est choisi pour obtenir un ménisque d'interface, entre air et liquide, tel que l'air pousse, lors du drainage gravitaire, tout le liquide contenu dans le capteur solaire.

7. Installation selon la revendication 1, **caractérisée en ce qu'**elle comporte une pluralité de capteurs solaires (1) disposés selon un arrangement en série (101) et parallèle (102), tel que la perte de charge hydraulique de groupe de capteurs raccordés en série et placés en parallèle soit prépondérante par rapport aux pertes de charges hydrauliques dans le reste du circuit primaire.

8. Procédé de mise en oeuvre de l'installation selon l'une quelconque des revendications précédentes, **caractérisé par** les étapes suivantes :
- le circuit solaire primaire (2) est rempli de manière hermétique de fluide caloporteur jusqu'au niveau imposé (32) du réservoir tampon (31) ;
- la pompe (19) est mise en route, aspire le fluide caloporteur et l'envoie dans le capteur solaire (1) ;
- par effet piston, le fluide caloporteur comprenant de l'air contenu dans le circuit primaire (2), en particulier dans le capteur (1), est envoyé par le premier conduit de retour (26, 27) dans le réservoir tampon (31), où l'air est séparé du liquide par gravité et à la sortie duquel le fluide caloporteur essentiellement dépourvu d'air est envoyé via le conduit de connexion (14) vers l'échangeur (4) ;
- de retour de l'échangeur (4), le liquide caloporteur est renvoyé au capteur (1) via la pompe (19), la vanne (21) du circuit de dérivation (28) entre le circuit aller et le réservoir (31) étant fermée tant que la pompe (19) fonctionne et l'installation se met en régime ;
- lorsque la pompe (19) cesse de fonctionner, le liquide caloporteur cesse de circuler dans le circuit primaire (2) et l'air emprisonné dans le réservoir tampon (31) remonte par surpression par le conduit (25) vers le capteur (1), via le clapet anti-retour (20), qui est alors en sens passant ;
- la remontée de l'air provoque le drainage gravitaire du circuit primaire, le liquide caloporteur retournant au réservoir tampon (31) d'une part par le conduit retour (26, 27) et d'autre part, par le conduit aller (30), le conduit de dérivation (28) et le conduit de retour (27), la vanne (21) située dans le conduit de dérivation (28) étant ouverte.

## Claims

1. A thermal solar installation with draining by gravity, comprising at least:
- one absorbing solar collector (1) raised relative to the remainder of the installation and in which a heat-transfer liquid circulates,
- one hermetic primary circuit (2), comprising a supply circuit (15,29,30,11) and a return circuit (12,26,27, 25,14) towards and from the collector (1) respectively, the primary circuit being provided with a pump (5,19) as well as with a buffer tank (31) that is thermally insulated and initially filled with heat-transfer liquid at an imposed level (32), having the function of a liquid/air separator,
- at least one heat exchanger (4),
- one secondary circuit (8) transporting the recovered energy towards a location of use (3),
- the return circuit of the primary circuit (2) is subdivided into two conduits (25;26,27), a first conduit (26,27) that brings the heat-transfer liquid back to a low point of the buffer tank (31) when the pump (19) is operating and a second conduit (25) opening at a high point of said tank (31),
- the buffer tank (31) being connected to the exchanger (4) through a connection conduit to the exchanger (14), the return conduit (29) connecting the exchanger (4) to the pump (19),
**characterized in that**:
- the second conduit is provided with an anti-return valve (20), which allows air to be returned to the collector (1) and hence the primary circuit (2) to be drained by gravity when the pump (19) no longer operates;
- the first conduit (26,27) is separated into a conduit (27) opening into the buffer tank (31) and a bypass conduit (28) opening into said supply circuit (30) downstream from the pump (19), and provided with a normally open valve (21) that closes as soon as the pump (19) operates;
- the return conduit comprises an anti-return valve (22), being located upstream from the connection of the supply circuit (30) to the bypass circuit (28).

2. Installation according to Claim 1, **characterized in that** the return conduit (29,30) of the exchanger (4) comprises a regulating valve (24) with an integrated flowmeter (23) downstream from the pump (19).

3. Installation according to Claim 1, **characterized in that** the valve (21) located in the bypass conduit (28) is an electromagnetic valve.

4. Installation according to Claim 1, **characterized in that** the capacity of the buffer tank (31) is adapted for receiving the whole volume of air initially contained in the primary circuit (2), while maintaining a permanent level of heat-transfer liquid (33) in the lower portion of said buffer tank (31).

5. Installation according to Claim 1, **characterized in that** the conduit (27) opening at a low point of the buffer tank (31) is provided with a stop valve (13).

6. Installation according to Claim 1, **characterized in that** the diameter of the conduits is selected so as to obtain an interfacial meniscus between air and liquid, such that the air pushes the whole liquid contained in the solar collector during drainage by gravity.

7. Installation according to Claim 1, **characterized in that** it comprises a plurality of solar collectors (1) positioned according to a series (101) and parallel (102) arrangement, such that the group hydraulic pressure loss of collectors connected in series and placed in parallel is predominant relative to the hydraulic pressure losses in the remainder of the primary circuit.

8. Method for implementing the installation according to any one of the preceding claims, **characterized by** the following steps:
- the primary solar circuit (2) is hermetically filled with heat-transfer fluid up to the imposed level (32) of the buffer tank (31);
- the pump (19) is started, sucks up the heat-transfer fluid and sends it into the solar collector (1);
- by a piston effect, the heat-transfer fluid comprising the air contained in the primary circuit (2), in particular in the collector (1), is sent through the first return conduit (26,27) into the buffer tank (31), where the air is separated from the liquid by gravity and at the outlet of which the heat-transfer fluid essentially without any air is sent through the connection conduit (14) towards the exchanger (4);
- upon returning from the exchanger (4), the heat-transfer liquid is sent back to the collector (1) through the pump (19), the valve (21) of the bypass circuit (28) between the supply circuit and the tank (31) being closed as long as the pump (19) is operating and the installation starts to operate steadily;
- when the pump (19) stops operating, the heat-transfer liquid stops circulating in the primary circuit (2) and the air confined in the buffer tank (31) flows upwards by overpressure through the conduit (25) towards the collector (1), through the anti-return valve (20), which is then in the through-pass state;
- the upward flow of air causes the drainage by gravity of the primary circuit, the heat-transfer liquid returning to the buffer tank (31) through the return conduit (26,27) on the one hand and through the supply conduit (30), the bypass conduit (28) and the return conduit (27) on the other hand, the valve (21) located in the bypass conduit (28) being open.

## Patentansprüche

1. **Thermische Solaranlage mit** Schwerkraftdrainage, die mindestens umfasst:
- einen absorbierenden Sonnenkollektor (1), der gegenüber der restlichen Anlage relativ erhöht ist und in dem eine Temperierflüssigkeit zirkuliert,
- einen hermetischen Primärkreis (2), der einen hinführenden Kreis (15, 29, 30, 11) und einen rückführenden Kreis (12, 26, 27, 25, 14) jeweils zum und vom Kollektor (1) umfasst, wobei der Primärkreis mit einer Pumpe (5, 19) sowie einem thermisch isolierten und anfänglich mit Temperierflüssigkeit in einer festgelegten Höhe (32) gefüllten Pufferbehälter (31) ausgestattet ist, der die Funktion hat, Flüssigkeit und Luft zu trennen,
- mindestens einen Wärmetauscher (4) und
- einen Sekundärkreis (8), der gewonnene Energie einer Nutzung (3) zuführt,
- wobei sich der rückführende Kreis des Primärkreises (2) in zwei Leitungen (25; 26, 27) unterteilt, eine erste Leitung (26, 27), die die Temperierflüssigkeit zu einem niedrigen Punkt des Pufferbehälters (31) führt, wenn die Pumpe (19) arbeitet, und eine zweite Leitung (25), die in einen hohen Punkt des Behälters (31) mündet,
- wobei der Pufferbehälter (31) mit dem Wärmetauscher (4) durch eine Wärmetauscher-Verbindungsleitung (14) verbunden ist, wobei die rückführende Leitung (29) den Wärmetauscher (4) mit der Pumpe (19) verbindet,
wobei die Anlage **dadurch gekennzeichnet ist, dass**
- die zweite Leitung mit einem Rückschlagventil (20) ausgestattet ist, das die Rückführung von Luft zum Kollektor (1) und infolge dessen die Schwerkraftdrainage des Primärkreises (2) erlaubt, wenn die Pumpe (19) nicht mehr arbeitet,
- sich die erste Leitung (26, 27) in eine Leitung (27) unterteilt, die in den Pufferbehälter (31) mündet und in eine Umleitung (28), die in den hinführenden Kreis (30) nach der Pumpe (19) mündet, und mit einem Ventil (21) ausgestattet ist, das normalerweise geöffnet ist und das sich schließt, sobald die Pumpe (19) arbeitet und ein Rückschlagventil (22) aufweist, das sich vor der Verbindung des hinführenden Kreises (30) mit der Umleitung (28) befindet.

2. **Anlage nach Anspruch 1, dadurch gekennzeichnet, dass** der rückführende Kreis (29, 30) des Wärmetauschers (4) ein Steuerventil (24) mit integriertem Durchflussmesser (23) nach der Pumpe (19) aufweist.

3. **Anlage nach Anspruch 1, dadurch gekennzeichnet, dass** das sich in der Umleitung (28) befindende Ventil (21) ein elektromagnetisches Ventil ist.

4. **Anlage nach Anspruch 1, dadurch gekennzeichnet, dass** das Fassungsvermögen des Pufferbehälters (31), bei Beibehaltung einer beständigen Höhe Temperierflüssigkeit (33) unten im Pufferbehälter (31), geeignet ist, das gesamte, anfänglich im Primärkreis (2) enthaltene Luftvolumen aufzunehmen.

5. **Anlage nach Anspruch 1, dadurch gekennzeichnet, dass** die Leitung (27), die in einen unteren Punkt des Pufferbehälters (31) mündet, mit einem Absperrschieber (13) ausgestattet ist.

6. **Anlage nach Anspruch 1, dadurch gekennzeichnet, dass** der Durchmesser der Leitungen ausgewählt ist, um zwischen Luft und Flüssigkeit einen Schnittstellenmeniskus zu erhalten, so dass die Luft während der Schwerkraftdrainage die gesamte enthaltene Flüssigkeit in den Sonnenkollektor drückt.

7. **Anlage nach Anspruch 1, dadurch gekennzeichnet, dass** sie eine Vielzahl von Sonnenkollektoren (1) aufweist, die in Reihe (101) und parallel (102) angeordnet sind, so dass der hydraulische Lastverlust in Reihe verbundener und parallel angeordneter Kollektorgruppen im Verhältnis zu den hydraulischen Lastverlusten im restlichen Primärkreis maßgeblich ist.

8. Verfahren zur Umsetzung der Anlage nach einem der vorangehenden Ansprüche, das durch die folgenden Schritte **gekennzeichnet** ist:
- der primäre Solarkreis (2) wird hermetisch bis zur festgelegten Höhe (32) des Pufferbehälters (31) mit Temperierflüssigkeit gefüllt,
- die Pumpe (19) wird eingeschaltet, saugt die Temperierflüssigkeit an und schickt sie in den Sonnenkollektor (1),
- die Temperierflüssigkeit, die die im Primärkreis (2) enthaltene Luft umfasst, insbesondere im Kollektor (1), wird durch Kolbenwirkung durch die erste rückführende Leitung (26, 27) in den Pufferbehälter (31) geschickt, wo die Luft durch Schwerkraft von der Flüssigkeit getrennt wird, und am Ausgang desselben wird die im wesentlichen von der Luft befreite Temperierflüssigkeit über die Verbindungsleitung (14) zum Wärmetauscher (4) geschickt,
- zurück vom Wärmetauscher (4), wird die Temperierflüssigkeit über die Pumpe (19) zum Kollektor (1) zurückgeschickt, wobei das Ventil (21) der Umleitung (28) zwischen dem hinführenden Kreis und dem Behälter (31) geschlossen ist, solange die Pumpe (19) arbeitet und sich die Anlage in Betrieb setzt,
- wenn die Pumpe (19) ihre Arbeit einstellt, hört die Temperierflüssigkeit auf, im Primärkreis (2) zu zirkulieren, und die im Pufferbehälter (31) eingeschlossene Luft steigt durch Überdruck durch die Leitung (25) über das Rückschlagventil (20), das dann geöffnet ist, zum Kollektor (1) auf,
- die aufsteigende Luft erzeugt die Schwerkraftdrainage des Primärkreises, wobei die Temperierflüssigkeit einerseits durch die rückführende Leitung (26, 27) und andererseits durch die hinführende Leitung (30), die Umleitung (28) und die rückführende Leitung (27) in den Pufferbehälter (31) zurückfließt, wobei das Ventil (21) in der Umleitung (28) geöffnet ist.
